Europäisches Patentamt

**European Patent Office**

**Office européen des brevets**

(19)

(11) Publication number: **0 130 713**
A2

(12)
# EUROPEAN PATENT APPLICATION

(21) Application number: **84303922.3**

(22) Date of filing: **11.06.84**

(51) Int. Cl.⁴: **F 16 J 15/20, F 16 J 15/32**

(30) Priority: **30.06.83 US 509499**

(43) Date of publication of application: **09.01.85**
**Bulletin 85/2**

(84) Designated Contracting States: **BE DE FR GB IT NL**

(71) Applicant: **UNIROYAL, INC., 1230 Avenue of the Americas Rockefeller Center, New York, New York 10020 (US)**

(72) Inventor: **Hagen, Edward Louis, 47 Sycamore Avenue, Woodbury, Litchfield Connecticut 06798 (US)**
Inventor: **Stone, Naureen Mary, RR Box 89, Middlebury New Haven Connecticut 06762 (US)**

(74) Representative: **Geldard, David Guthrie et al, URQUHART-DYKES AND LORD 11th Floor, Tower House Merrion Way, Leeds, LS2 8PB West Yorkshire (GB)**

(54) **Multihardness connector and method for manufacturing the same.**

(57) A multidurometer connector is provided having a flange section (11) of one hardness and a sealing section (10) of a second lower hardness. The flange and sealing sections are molded together so as to form a unitary article.

## MULTIHARDNESS CONNECTOR AND
## METHOD FOR MANUFACTURING THE SAME

This invention relates to a connector, particularly a connector for providing a seal between a moving member and a static member, and to a method for manufacturing such a connector. The connector may be in the form of a snubber which provides a connection for the insertion of a pipe into an oil well bore hole, stuffing box or the like.

Conventional connectors for providing a seal between a moving and a static member comprise a rubber sealing section which is adapted to fit inside a static cylinder such as an oil well bore hole, lining the inside of said cylinder of the static member. A metal ring is conventionally imbedded into the sealing section and forms a flange. The flange may be conventionally fastened if necessary to the static member by fastening means such as a bolt, screw or a clamp.

Connectors having metal parts, usually fabricated from steel, bronze, brass and the like materials, do however have limited wear and corrosion resistance which impede their sealing abilities, and they are generally heavy, difficult to repair and cumbersome to handle. This invention seeks to provide a connector which overcomes these disadvantages, and at considerable reduction in cost.

According to the invention a connector comprises a flange section and a sealing section wherein said flange section is comprised of a polymer having a first hardness; said sealing section is comprised of a polymer having a second hardness lower than said first hardness; said sealing section forms an opening adapted to surround and seal a rigid article which is inserted in said opening; and said flange section and sealing section are molded together to form a unitary article.

Multi-durometer polyurethane products are known, such as scraper bars, railroad side bearings, tires, O-rings, wheels and the like, but none have the configuration required by this invention. An especially typical application of the connector of this invention is for a snubber used for sealing oil rig drilling shafts at the exit of the lead-in pipe.

It will be appreciated that the connector of this invention comprises two or more sections having different durometer values, it being understood that such sections are molded together to form a unitary article, so that for all practical purposes, they are not separable except by drastic means such as sawing or cutting.

The sealing section of the connector usually has a Shore durometer hardness in the range of 40A-92A, preferably 60A-90A, most preferably of 70A-90A. In the fastening section the Shore durometer hardness may be in the range 80A-80D, preferably 90A-75D and most preferably, 90A-60D. The fastening section invariably has a higher durometer value than that of the sealing section, within the ranges indicated above. The fastening section is designed to assure firm connection to the member(s) to which it is attached, whereas the sealing section has a higher degree of elasticity or softness, to provide a tight, flexible seal unencumbered by possible unevenness of the moving or tube members involved.

The invention also extends to a method for manufacturing a connector, the method comprising introducing a reactive mixture of a polyurethane prepolymer or quasi-prepolymer and a curative therefor into a mold to form a first section having a first hardness, forming a second section by introducing a second polyurethane polymer or quasi-prepolymer and a curative mixture therefor into said mold at a time when said first section is still deformable and does not readily retain its original shape after deformation and which second section has a different hardness from said first section; wherein said second section partially co-mingles with the said first section during the molding process so as to form a unitary article; and completing the cure of both first and second sections.

The time when the first section is still deformable and does not readily retain its original shape after deformation is its so-called peak time. After the second polyurethane polymer has achieved its peak time, another reactive polyurethane mixture, having a hardness different from the second polyurethane section may, if required, be introduced. Continuing in this fashion, articles may be produced having sections of different hardnesses, although usually only two to three such sections are incorporated in one product.

It should be mentioned that the time of addition of reactive polyurethane mixture is critical, i.e., if the previous polyurethane has not yet reached a stage at or close to its peak time, the subsequent reactive polyurethane may blend in with the first mixture, possibly causing an undesirable partial or total change of hardness of either section. Similarly, if the previous reactive polyurethane mixture has reached a stage well beyond the peak time before adding the following reactive polyurethane mixture, adhesion of the two sections may be reduced to a point where the integrity of the product may be in question. On the other hand, it is desirable that some co-mingling of previous and subsequent reactive polyurethane portions takes place enhancing bonding between sections.

The sequence of addition for these sections is not really critical, but it is preferred to prepare a mold, allowing the introduction of the lower hardness polyurethane first, followed by the addition of the higher hardness polyurethane, especially in the dual-durometer product.

Once all desired sections have been properly added to the mold, and the resultant article has achieved sufficient structural stability, it may be removed from the mold. A post-cure cycle of about two to three hours at about 150-220°F (65-105°C) is advisable but not essential.

The connectors of this invention may be prepared from conventional polyurethane prepolymers or quasi-prepolymers having a free isocyanate content of from 3-12% and 13-30% by weight, respectively. Curatives for such pepolymers are well known to the art, and are either based on polyhydroxy or polyamine type compounds. The equivalent ratio of NCO-groups of the prepolymers to reactive OH or $NH_2$ groups of the curatives are also within the conventional ranges, such as 1.2/1-1/1.2, preferable 1.1/1-1/1.1.

A specific embodiment of a connector according to the invention will now be described in more detail, by way of example only, with reference to the accompanying drawings, in which:

Fig. 1 is a top view of a connector according to the invention;

Fig. 2 is a cross section taken along line 2-2 of Fig. 1. of said connector;

Fig. 3 is a side elevation of said connector.

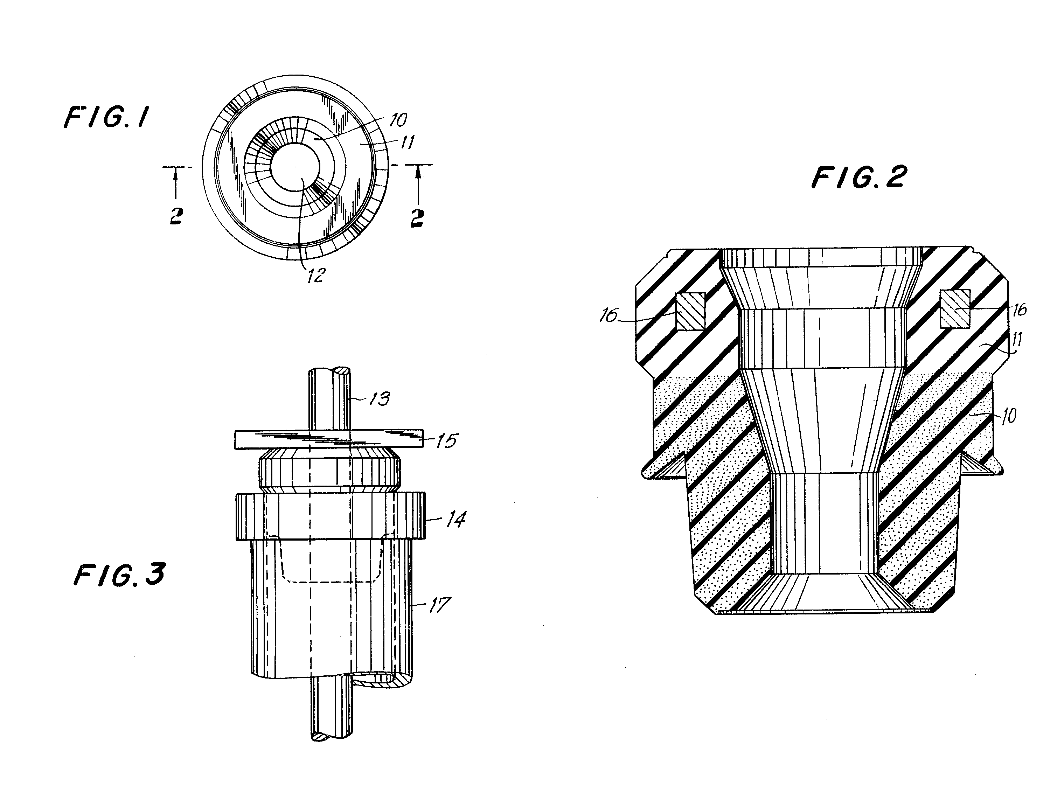

The connector is of generally tubular form and is comprised of two polyurethane materials each of a different hardness and which are molded together to form a unitary connector. As shown in Figs. 1-3 sealing section 10 and flange section 11 are of different polyurethane polymers but are molded together. Sealing section 10 forms an opening 12 which is adapted to accept a shaft or pipe 13 having an outside diameter approximately equal to the inside diameter of said opening. The flange section being of a harder material may be fastened to a static member 17 by fastening means such as bolts, screws or a clamp (not shown) and a hold down 15. The static member may be a well bore hole having a flange 14 and the flange of the invention may be connected to said well bore hole flange by such fastening means.

A shaft or pipe 13 may be inserted inside the connector and in to the well bore hole. Sealing section 10 provides a tight fit around the shaft 13 and enables said drilling shaft to move up and down while maintaining a seal under pressure. A reinforcing member 16 may be inserted or imbedded in the flange section of the connector to provide additional strength.

The article may be provided with more than one flange section and may also have more than one sealing section. In such cases the sealing section may lie both above and below the flange section. Specific examples of molding of the invention are given in the following examples by way of illustration.

### Example 1

A dual durometer article was prepared having the configuration of Figs. 1-3 in the following manner: A prepolymer was made having 3.35% (weight) free isocyanate groups from poly(ethylene-propylene adipate)glycol having 2000 molecular weight and 2,4-tolylene diisocyanate. The prepolymer (100 parts) was heated to about 88°C and then mixed with 4,4'-methylenebis(o-chloroaniline) curative, (10 parts, weight), which had been heated to 115°C. The mixture was poured into the mold, and after about 20 minutes the cast polyurethane had achieved sufficient consistency for addition of the second polyurethane (as determined by frequently applying a glass rod to the surface of the curing polymer until it was resistant to pressure, but tacky), a second curable polyurethane mixture was added in sufficient quantity to fulfill the requirements of molded article, based on a prepolymer (100 parts) of poly (ethy-

lene adipate)glycol having 1000 molecular weight and tolylene diisocyanate (free NCO of prepolymer: 5.6% by weight) and 4,4'-methylenebis(o-chloroaniline) (16.9 parts, by weight). Once the second polyurethane polymer had reached a firm consistency the whole article was removed from the mold and postcured at 75°C for two hours. The fully cured article had the following hardness: first section: 80A, second section: 50D (Shore).

This article is clamped onto the top end of an oil well pipe, and a servicing pipe is passed through said article into the well for making certain corrections in said well and while maintaining pressure control. Improved seal integrity (pressure control) was achieved in comparison to similar articles made from bronze.

### Example 2

Following essentially the preparation procedure of Example 1, the following ingredients were employed:

First polyurethane:　100 parts prepolyer + 6.8 parts curatives
　　　Prepolymer:　poly(ethylene-propylene adipate)glycol 2000 M.W.;
　　　tolylene diisocyanate;
　　　Free NCO: 3.3% (weight)
　　　Curative:　Isonol [trademark] 93; highly reactive low M.W. triol;
　　　equivalent weight: 93.

Second polyurethane:　100 parts prepolymer + 13.8 parts curative
　　　Prepolymer:　poly(ethylene-propylene adipate)glycol M.W. 1000
　　　tolylene diisocyanate
　　　Free NCO: 4.55% (weight)
　　　Curative:　4,4'-methylenebis (o-chloronailine) (MOCA)
Product Properties:　First section hardness: 60A (Shore)
　　　Second section hardness: 40D (Shore)

In the application of this article, which was essentially the same as for that of Example 1, most satisfactory results were obtained.

## Example 3

An article was produced having a higher hardness flanged section with four openings for inserting bolts and a lower hardness elongated portion                    by employing essentially the procedure of Example 1 employing the following ingredients:

First polyurethane:      100 parts prepolyer + 9.9 parts curatives

    Prepolymer:      poly(tetramethylene ether)glycol, M.W. 1000 tolylene diisocyanate;

                         Free NCO: 3.16% (weight)

    Curative:      MOCA

Second polyurethane:      100 parts prepolymer + 18.1 parts curative

    Prepolymer:      as first prepolymer above, except free NCO: 6.46% weight

    Curative:      MOCA

Product Properties:      First section hardness: 82A (Shore) Second section hardness: 48D (Shore)

The article was employed in a stuffing box for a propeller shaft providing a seal between the boat interior and surrounding water with most satisfactory results.

## Example 4

Example 3 was repeated except that within the flanged polyurethane section was embedded a reinforcing ring member made from brass having four bolt openings corresponding with those of the flanged section with respect to locations and diameters. Essentially the same results were achieved with this product where employed in a similar fashion as that of Example 3.

CLAIMS:

1.    A connector comprising a flange section (11) and a sealing section (10) wherein said flange section is comprised of a polymer having a first hardness; said sealing section is comprised of a polymer having a second hardness lower than said first hardness; said sealing section forms an opening (12) adapted to surround and seal a rigid article which is inserted in said opening; and said flange section and sealing section are molded together to form a unitary article.

2.    A connector according to claim 1 wherein the Shore hardness of the flange section is from 80A-80D and the Shore hardness of the sealing section is from 40A-92A.

3.    A connector according to claim 1 or claim 2 wherein a reinforcing member (16) is embedded in said flange section.

4.    A connector according to any one of the preceding claims wherein said polymers are polyurethanes.

5.    A connector according to claim 4 wherein said polyurethanes are prepared from polyurethane prepolymers having a free isocyanate content of from 3-12% by weight.

6.    A connector according to claim 4 wherein said polyurethanes are prepared from a quasi-prepolymer having a free isocyanate content of from 13-30% by weight.

7.    A method for manufacturing a connector comprising introducing a reactive mixture of a polyurethane prepolymer or quasi-prepolymer and a curative therefor into a mold to form a first section having a first hardness, forming a second section by introducing a second polyurethane polymer or quasi-prepolymer and a curative mixture therefor into said mold at a time when said first section is still deformable and does not readily retain its original shape after deformation and which second section has a different hardness from said first section; wherein said second section partially co-mingles with the said first section during the molding process so as to form a unitary article; and completing
the cure of both first and second sections.

FIG.1

2 —|

2 —|

10
11
12

FIG.2

16    16
11
10

FIG.3

13
15
14
17

0130713